# EUROPEAN PATENT APPLICATION

(11) **EP 4 505 864 A1**
(43) Date of publication of application: **12.02.2025**
(21) Application number: 24193867.9
(22) Date of filing: 09.08.2024
(51) Int. Cl.: A01G 9/08

(54) **DEVICE FOR LIFTING AND/OR DISPLACING A PLURALITY OF OBJECTS**

(30) Priority: 11.08.2023 NL 2035594
(71) Applicant: Huijbregts, Tom, 4881 NE Zundert (NL); Jochems, Johannes Josephus Franciscus Marie, 4884 ME Wernhout (NL)
(72) Inventor: Huijbregts, Tom, 4881 NE Zundert (NL); Jochems, Johannes Josephus Franciscus Marie, 4884 ME Wernhout (NL)
(74) Representative: Patentwerk B.V.

(57) **Abstract**

The present invention relates to a device (100) for lifting and/or displacing a plurality of objects, in particular plant pots (115), more in particular plant pots (115) having a substantially frustoconical shape, relative to a ground surface, comprising at least one first fork (101), comprising at least two elongated mutually spaced apart and substantially parallel first fingers (103), comprising a plurality of first contact areas (113, 114) for abutting against at least one object to be displaced, at least one second fork (102), comprising at least two elongated mutually spaced apart and substantially parallel second fingers (104), comprising a plurality of second contact areas (113, 114) for abutting against at least one object to be displaced, wherein the at least two second fingers (104) and the at least two first fingers (103) are movable with respect to each other in at least a vertical direction. The invention further relates to a fork lift provided with the same.

## Description

The present invention relates to a device for lifting and/or displacing a plurality of objects, in particular plant pots, more in particular plant pots having a substantially frustoconical shape, relative to a ground surface, the present invention further relates to a forklift provided with such a device.

In the horticulture it is common to position objects, such as plant pots, outside. Besides positioning of objects such as pots outside, it is also common to place pots in a greenhouse, or other large storage facility for allocating plant pots or other objects. This might among others be useful considering available indoor space. It can be desired to displace the plant pots at a certain distance relative to each other, for example in a certain pattern such as an alternating pattern. The pattern gives the plants enough space to catch rainwater and sun light which stimulates the growth of the plants. Therefore, placing the plant pots in a pattern is desired. However, during transport, e.g., to a horticulture company, it is typically undesired to have the plant pots in a pattern since this would render a lot of space not used. This makes transport less efficient which is usually not desired. Therefore, during transport it is common to have the pots located as close to each other as possible. Preferably, the pots are placed in a matrix, such as N by M rows and columns. This allows for efficient transport. This however requires the horticulture company to displace the plant pots.

Up till not too long ago, displacing the plant pots, i.e., into a pattern, was done manually. Not only is this a very cumbersome job, it is not very accurate either. By hand it is rather impossible to have a structured equidistant pattern of plant pots. Therefore, machines are used for displacing or lifting the plant pots. An example of such a machine may be a forklift, which allows for more easily lifting a plurality of pots, for example the N by M matrix of pots, in a single action. However, this does not allow for placing the pots in a specific pattern, merely the pattern in which the pots arrive.

There are devices which may be coupled to a forklift, which allow for placing the plant pots according to a pattern. However, these are typically very complex, and does not provide a reliable result. For example, one of such devices can be coupled to a forklift and comprises fork with a number of longitudinal fingers, placed at a mutual distance allowing the fingers to lift plant pots arranged between said fingers. The fingers are provided with a transport belt, or chain, which may allow plant pots to be translated along the fingers. However, in order to place the pots on the ground, the fork must be tilted. Subsequently the belt translates the pots, which at one point fall from the fingers. One major disadvantage of such devices is that pots may tip over during placement in a pattern, requiring manual intervention. This problem is even bigger when the objects, in particular pots, are to be placed on uneven ground surfaces. Uneven in this respect may be understood as a local clump of material such as substrate (e.g., ground). Typically, a ground surface will become less smooth, i.e., more uneven, over time due to the use, which includes spillage of substrate onto the ground, which may after a rain shower clump together. Additionally, such device requires rather complex and fragile engineering. Especially within the horticulture, where the devices are exposed to weather conditions, sand, dirt, and heavy plant pots, this results in damage to the device.

Therefore it is a first object of the invention is to provide a robust device to lift and/or displace objects, for example plant pots in a pattern.

It is a second goal to provide for a device that allows for more accurate placement of plant pots.

It is a third goal of the invention to provide a device which allows to reduce the manual interaction for placing the plant pot to a minimum.

It is a fourth goal to provide a simpler and cheaper device to lift and/or displace objects.

The present invention thereto proposes a device for lifting and/or displacing a plurality of objects, in particular plant pots, more in particular plant pots having a substantially frustoconical shape, relative to a ground surface, comprising at least one first fork, comprising at least two elongated mutually spaced apart and substantially parallel first fingers, preferably comprising a plurality of first contact areas for abutting against at least one object to be displaced, at least one second fork, comprising at least two elongated mutually spaced apart and substantially parallel second fingers, preferably comprising a plurality of second contact areas for abutting against at least one object to be displaced, wherein the at least two second fingers and the at least two first fingers are movable with respect to each other in at least a vertical direction, preferably wherein a distance between centerlines of a pair of adjacent first fingers and a pair of adjacent second fingers is substantially equal, and wherein the contact areas of at least one second finger laterally protrudes in an alternating pattern with respect to the centerline of said at least one second finger.

By allowing the at least two first fingers and the at least two second fingers to move in at least a vertical direction with respect to each other it is possible to lift and displace the objects in a more robust manner. That is, no complex transmissions are required allowing the device to lift and displace pots by means of a vertical movement of the first and second fingers. Since the distance between centerlines of both a pair of adjacent first and a pair of adjacent second fingers is the same, it is possible to lift a pot by the adjacent pair of first fingers, or the adjacent pair of second fingers, by each pair individually. Yet, owing to the same distance between the centerlines, it allows the device to lift objects by the pair of first fingers and the pair of second fingers together, i.e., when they are positioned (directly) on top of each other. Hence, providing great flexibility in terms of lifting and displacing objects. More in particular, it allows the present invention to place objects in direct contact with the ground through an essentially vertical movement, which increases accuracy of placing objects. The latter may in fact ensure a pot is stably positioned, reducing risks of pots tipping over upon placement and therefore reducing need for manual interaction. This may even be ensured in case the ground surface where the object, in particular the pot, is to be placed, is not entirely even. Hence, unevenness such as protrusions do not directly cause the objects to tip over upon placement.

The alternating pattern may for example be formed by flanges, which protrude with respect to a centerline. Alternating pattern may be understood as comprising portions which extend into different directions. It is not necessarily required that the alternating pattern is a repetitive pattern. Hence, it is conceivable that the protrusions alternate in a random order. However, it is preferred that the protrusions with respect to the centerline protrude in a repetitive pattern, preferably alternately (hence, left-right-left-right). Said alternating pattern may be formed by parts of the second finger protruding. Said protruding parts may, at least seen from a top-view, alternate in a block-pattern, however a wave-like or sinus-like pattern or otherwise alternating pattern is also conceivable. Preferably, adjacent contact areas of the second finger are arranged at opposing sides of the centerline.

It is imaginable that the first fingers and second fingers are movable as such, yet it is also conceivable that the first fingers are mounted to, or form part of, the first fork and are movable by a movement of the first fork. Similarly, it is also conceivable that the second fingers are mounted to, or form part of, the second fork and are movable by a movement of the second fork. The first and/or second fork may be formed by a frame, such as a beam, to which the first fingers and second fingers are respectively attached. Preferably, at least two adjacent first fingers move simultaneously, more preferably all first fingers move simultaneously, at least in a vertical direction. Similarly, it is preferred that, at least two adjacent second fingers move simultaneously, more preferably all second fingers move simultaneously, at least in a vertical direction. Preferably, the length of at least one first finger and/or at least one second finger is situated between 1.0 m and 3.5 m, preferably between 1.5 m and 2.5 m. Yet, it may be conceivable that at least one first finger and/or at least one second finger has a length of 5.0 m.

According to a preferred embodiment the at least two second fingers, preferably all second fingers, and the at least two first fingers, preferably all first fingers, are at least movable in an upward and downward direction along the same vertical path. This may ensure that, when the pair of adjacent first fingers and the pair of adjacent second fingers are moving towards each other, they end up directly on top of each other. This in turn may allow the said pairs of first and second fingers to mutually carry an object. Preferably, each first finger is movable in an upward and downward direction along the same vertical path of at least one second finger. Imaginably, each first finger is movable along the same vertical path as each respective second finger, preferably wherein each second finger is situated above a respective first finger. Preferably, the first fingers and/or second fingers are movable individually and/or together. That is, it is imaginable that each first finger is movable with respect to other first finger or with respect to other second fingers. Yet, it is also imaginable that each first finger is movable together with the other first fingers and together with, preferably each, of the second fingers. A combinations thereof are also conceivable. This may yield a high degree of flexibility for lifting and displacing objects. The at least two first fingers and the at least two second fingers (or the first for and the second fork) are movable between at least a combined position, wherein the second fingers are (directly) on top of the first fingers, and a separated position, wherein the second finger is displaced, in vertical direction that is, with respect to the first finger. It is possible that in the combined position, the first and second fingers may be moved in a combined manner, that is, not mutually separating during a movement. This is possible by actuating, e.g., essentially only the first finger, which induces its movement onto the second finger which rests onto said first finger. In the separated position, the second finger is moved with respect to the first finger, and hence they are at a mutual distance. The second finger, however, remains above the first fingers. It is possible in both the combined and the separated position to lift objects. However, preferably the second fingers, in particular the second fork, is configured to lift only a subset of the number of objects compared to the first fingers, in particular the second fork, or compared to the combined position.

Preferably at least one first finger, more preferably each first finger, comprises an accommodating space, configured for accommodating at least a portion of at least one second finger, preferably each second finger. This is in particular beneficial since it may allow a second finger to be partly or entirely be accommodated within the accommodating space, which may reduce the overall height of the fingers when they are directly on top of each other. Hence, in this respect, a second finger which is accommodated entirely or partly in the accommodating space may also be understood and referred to as the second finger being directly on top of the first finger. By accommodating at least a portion of the second finger into the accommodating space of the first finger, a more compact combined fork may be formed. According to a preferred embodiment, the at least one first finger is substantially U-shaped, wherein each upward leg of the substantially U-shaped first finger comprises a plurality of second contact areas, preferably wherein the U-shape defines an accommodating space for accommodating at least a portion of at least one second finger. Preferably, the at least one first finger and the at least one second finger are complementary shaped. It is conceivable that the legs of the U-shaped first finger stretch along substantially the entire length of the first finger. The plurality of second contact areas are preferably arranged on the legs of the U-shaped first finger, preferably, an outward surface and/or top surface of said legs. Preferably, each leg of the U-shaped first fingers comprises a plurality of second contact areas. The U-shape was found particularly advantageous since it allows to receive at least one second finger, whilst at the same time protecting the accommodating space since the bottom side of the U-shape is downwardly facing. It is imaginable that a bottom side of at least one first finger, preferably each first finger, is provided with one or more openings arranged on a bottom side thereof. This may allow for drainage of e.g., water, dirt, or the like. This is particularly suitable when the first finger is substantially U-shaped.

Preferably, at least one, preferably each, second finger is substantially T-shaped. A downward facing leg of the T-shaped second fingers may be received in the accommodating space of the first finger. Preferably, The horizontal portion of the T-shaped second finger comprises a plurality of second contact areas. It is conceivable that the leg of the T-shaped second fingers coincides with the centerline of said finger. Preferably, the horizontal portion of the T-shaped second finger protrudes with respect to the downwardly extending leg, preferably in an alternating pattern with respect to said downwardly facing leg. It is conceivable that the first finger and the second finger mutually for a single finger when accommodated. This allows the device to be used as if it were a device with a single fork. This contributes to operability, and requires no further instructions to the operator of the device compared to the known devices.

It is imaginable that at least a part of at least one second finger, in particular one contact area of at least one second finger, covers at least a portion of a contact area of at least one first finger, at least when the second finger is partially accommodated in the first finger. Preferably, the horizontal portion, in particular a downward facing surface, of the T-shaped second finger abuts the upward legs of the U-shaped first fingers, at least when the second finger is accommodated in the first fingers accommodating space. This allows the second finger, when accommodated, to rest on the first finger. This is advantageous since lifting the first finger simultaneously lifts the second finger. When the second finger is accommodated in the accommodating space, this may also be referred to as the combined position.

Preferably a maximum width of at least one second finger, preferably each second finger, is smaller or equal to a width of at least one first finger, preferably each first finger. This may allow the first finger and second finger to still lift all objects when in combined position. This is in particular the case when the second finger comprises less contact areas. Moreover, this may allow the second finger to be accommodated in the first finger.

Preferably, the number of contact areas of at least one second finger, preferably each second finger, is less than the number of contact areas of at least one first finger, preferably each first finger. This may allow the device according to the present invention to use the second fork to lift a reduced number of objects compared to either the first fork or the first and second fork in combined position. This allows to reallocate a subset of objects by means of the second fork. In particular, the number of contact areas of at least one second finger, preferably each second finger, is substantially half the number of contact areas of at least one first finger, preferably each first finger. This allows the second fingers, or the second fork to be used such as to lift half of the objects. In particular to reallocate half of the objects. It may be the case, for example when the second finger is accommodated at least partially in the first finger, hence in combined position, that some of the second contact areas of the second finger cover or overlap with first contact areas of a first finger. This may cause some of the first contact areas to become inactive, which means that the second contact area of the second finger abuts the object to be moved. The contact areas which abut against an object to be moved may be referred to as active contact areas. Hence, in case of a U-shaped first finger and a T-shaped second finger, which are in combined position, the number of active contact areas of both the first finger and second finger may be the same.

According to a preferred embodiment contact areas are arranged on mutually facing sides of a pair of adjacent first fingers and/or a pair of second fingers such that said pair of adjacent first fingers and/or said pair of second fingers are arranged to co-act, such as to lift an object to be displaced. Preferably, the contact areas are arranged at opposing sides on the pair of adjacent fingers. Preferably, the distance between a pair of adjacent fingers is smaller than the width of an object to be displaced. Hence, in particular when lifting plant pots, which typically have a diameter which increases from a ground contact area to the upper side, this allows the fingers to enclose the object and when the forks are lifted, the contact areas of the fingers make contact with opposing sides of the object, allowing it to lift the object. Although throughout this application a contact area is mentioned, it is not necessarily required for an object to abut against the entire object. For example, a frustoconical plant pot may just have two contact points at opposing and mutually facing sides of a pair of fingers.

According to a preferred embodiment at least one first finger, preferably each first finger defines a lowest vertical boundary position of at least one second finger, preferably each second finger. That is, at least along the same vertical path of the first and second finger. Preferably, said lowest vertical boundary position is a dynamic boundary position. The location of the boundary may be adapted by the position of the first finger. Hence, the second finger is arranged such that it cannot move below the first finger. This may provide for robust operability.

Preferably, the at least one first fork and/or the at least one second fork are movably attached to a support structure. In particular, wherein said support structure comprises a coupling element, for allowing the support structure to be coupled to a forklift, in particular to a mast and/or carriage of said forklift. It is conceivable that at least one of the first fork and/or second fork form an integral part of the support structure. For example, the first fork may be attached, or a part of the support structure. The second fork may be movably attached to the support frame and/or to the first fork. Preferably, the at least one second fork is guided along the support frame. That is, the second fork may be guided via e.g., cylinders, guide rollers, or the like, such that a stable (vertical) movement of the second fork with respect to the first fork may be achieved. It is also imaginable that the second fork is attached to a second support frame, wherein the second support frame is movable with respect to the support frame, e.g., via an actuator. Preferably, the support structure and/or first fork are movable in a vertical direction via the mast of a forklift. The second fork and/or second support structure are preferably movable with respect to the first fork via a lift cylinder of the forklift. Yet, it is also conceivable that the lift cylinder is part of the device. In that respect, the actuator configured to move the second fork and/or second support structure is formed by e.g., a lift cylinder. This provides for a very robust mutual movement of the first and second fork. In addition, it allows for providing a more cost efficient design of the device compared to the prior art whilst also increasing the robustness.

This may be beneficial since it allows the device to be coupled to a forklift which is widely adopted in horticulture. This makes the use of the device of the present invention easy and more affordable. Preferably, the support structure comprises at least one lifting mechanism, wherein said lifting mechanism is configured for moving the at least one second fork with respect to the support structure and/or with respect to the at least one first fork. The lifting mechanism may be an active lifting mechanism or a passive mechanism. That is, an active lifting mechanism may be activated by an actuator of the device as such, a passive lifting mechanism may an external actuator to provide for the movement (e.g., through the forklift to which the device is coupled). It is preferred that the lifting mechanism comprises at least one connection element, preferably a belt or chain, in particular wherein said connection element is configured for connecting the lifting mechanism to a drive of a forklift. It is important to note in this respect that the chain or belt is solely used for moving the first fork and/or second fork with respect to each other, and hence not for moving the objects to be moved.

Preferably, the first fork comprises at least five, in particular at least eight, elongated mutually spaced apart and substantially parallel first fingers, comprising a plurality of first contact areas for abutting against at least one object to be displaced, and wherein the at least one second fork comprises at least five, in particular at least eight, elongated mutually spaced apart and substantially parallel second fingers, comprising a plurality of second contact areas for abutting against at least one object to be displaced. The space between adjacent first fingers and the space between adjacent second fingers is preferably constant and the same between all adjacent pairs of first and second fingers. The distance is preferably adapted for a specific diameter of plant pot.

It is imaginable that the first fork is arranged for lifting a matrix of N rows by M columns, and wherein the second fork is arranged for lifting a subset of objects from each of the M columns of the N by M matrix. For example 7 rows by 12 columns. However, The number of rows and columns may differ based on the diameter of the plant pots that is to be displaced. For example, the 7 rows and 12 columns may correspond to standardized 5L plant pots. When larger pots are to be lifted and displaced, less rows and columns may be provided.

The present invention is further related to a forklift, wherein said forklift is provided with a device according to the present invention. The same benefits as presented above apply mutatis mutandis to the forklift according to the present invention.

The present invention will hereinafter be further elucidated based on the following non-limitative figures, wherein:
- Figure 1 shows a schematic rear perspective view of the device according to an embodiment of the present invention
- Figure 2 shows a schematic front perspective view of the device according to an embodiment of the present invention;
- Figure 3 shows a schematic top view of a part of the device according to an embodiment of the invention;
- Figure 4 shows a detail of the device according to an embodiment of the present invention;
- Figure 5 shows a cross section of a detail of the device according to an embodiment of the present invention.

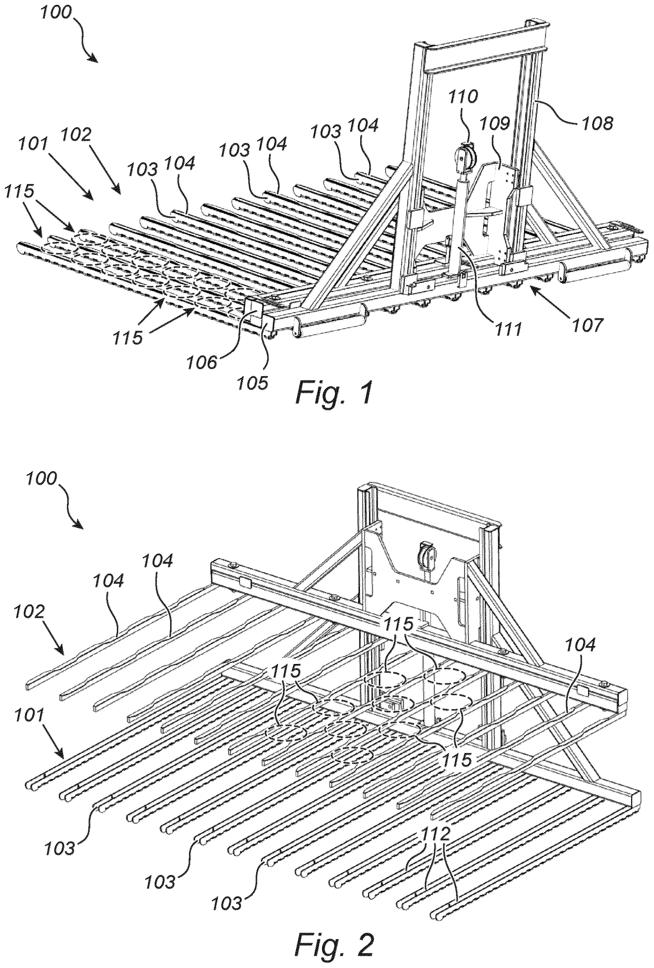

Figure 1 shows a non-limitative embodiment of the device 100 according to the invention. The device 100 is sown in a condition wherein the first fork 101 and the second fork 102 are in a combined position, and in particular forming a single fork, for lifting a matrix of N by M pots 115. The pots 115 are close to one another, and this combined position indicated in this figure allows to lift the pots 115 e.g., from a truck towards a destination. The pots 115, which may also be other objects, are resting or abutting against contact areas of the first fork fingers 103 or second fork fingers 104. In this embodiment, the first fingers 103 are mounted or attached to a beam 105 of the first fork 101. The second fingers 104 are attached to a beam 106 of the second fork 102. Hence, by lifting the beams 105, 106, of the first fork 101 and second fork 102 the fingers 103, 104, can be raised or lowered. The first beam is in this embodiment part of a support frame 108 which support frame may comprise coupling element 107 which allows for coupling the support frame 108 to a forklift (not shown). Hence raising the support frame 108, and as such the beam 105 and first fingers 103 of the first fork 101, can be done via the forklift. The beam 106 of the second fork 102 to which the second fingers 104 are mounted is attached to a second support frame 109. Here, the second support frame 109 is movable with respect to the support frame 108. This allows a respective movement of the support frames 108, 109, and therefore of the forks 101, 102. In order to raise or lower the second fork 102, a lifting mechanism 111, 110, may be provided. Said lifting mechanism may be coupled, e.g., via a belt or chain (not shown) to the forklift. Therefore, no complex drives are needed for the device 100 according to the present invention. That is, essentially all respective movements may be performed by a forklift to which the device is coupled or may be coupled to. This is a great advantage since it makes the device more robust and may provide for an easy operation of the device. In the combined position of the first fork 101 and second fork 102 as shown here, all pots (objects) may be lifted and displaced at once. By lifting the second fork, e.g., from the position shown here, to the position shown in figure 2, a subset of object, pots 115 may be raised. This may allow for locating the entire N by M matrix of pots 115, subsequently lifting a checkered subset of pots 110 out of the N by M matrix by lifting the second fork 115, and subsequently positioning the subset of pots 115 at a desired location.

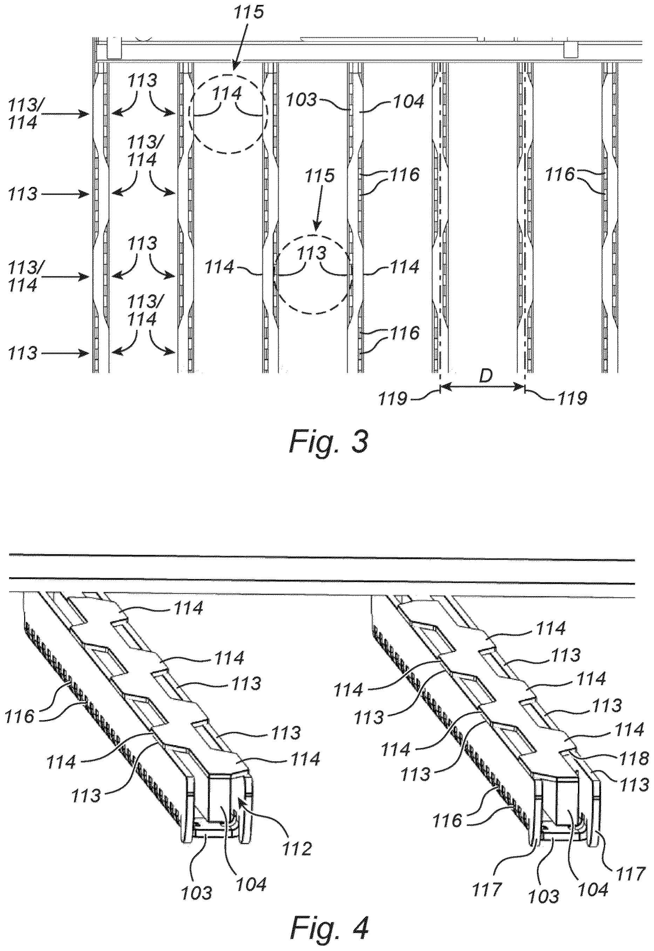

Figure 2 shows an embodiment of the device 100 according to the present invention in which the second fork 102 is shown in a raised position. It is schematically indicated that a subset of pots 115 (objects) is lifted by the second fork 102. This is possible since the second fingers 104 comprise a alternatingly lateral protruding top surface (shown in more detail in figures 3, 4, and 5). This figure also indicates the checkered pattern of pots 115 lifted by the second fork 102. This figure also shows the first fingers 103 of the first fork 101 comprise an accommodating space 112 which is configured for accommodating a part of the second fingers 104. Here, where the second fingers 104 are lifted with respect to the first fingers 103, the accommodating spaces 112 are empty. Once the subset of pots 115 is lifted by the second fingers 104 of the second fork 102, they may be transported to their intended position, where the second fork 102, and hence the second fingers 104 may be lowered. Since lowering is done along an essentially vertical path, which path extends entirely towards the ground surface, the plant pots 115 may be positioned stably on the ground surface, without risk of them tipping during placement.

Figure 3 shows a top view of a part of the device 100. This figure indicates the first fingers 101 and second fingers 102, in the case where they are on top of each other (combined position). The distance D between centerlines 119 of adjacent first fingers 101 and second fingers 102 is substantially identical. What can also be seen in this figure is that the width of the second fingers 104, at least the top surface, does not extend beyond the width of the first fingers 103. Each of the first fingers 103 and second fingers 104 comprises a plurality of contact areas 113, 114 respectively. The contact areas abut against the object 115 to be displaced. Since in this combined position, the top surface of the second fingers 104 may rest on the first fingers 103, it is imaginable that some of the contact areas 113 of the first fingers 103 are covered by the contact areas 114 of the second fingers 104. As can be seen in this figure, the contact areas 114 of the second fingers protrude with respect to the centerline 119 thereof in an alternating pattern. Adjacent fingers 103, 104 are configured to lift and object 115 via the mutually facing or opposing contact areas 113, 114. Since the second fingers 104 comprise the alternating contact areas 114, a pair of adjacent second fingers 104 is only able to lift an object 115 where the contact areas 114 of said pair of second fingers 104 is protruding towards each other. This is indicated by the left top object 115 which is schematically indicated. In this combined position, the a pair of adjacent first fingers 103 of the first fork 101 is configured to lift the objects 115 which cannot be lifted by the second fingers. This is, e.g., shown by the pot 115 on the right. The contact areas 114 of the second finger 104 face away from one another, hence not being able to lift the object 115.

Figure 4 shows a perspective view of a detail of the device 100 according to an embodiment of the present invention. The detailed view shows two adjacent first fingers 103 and two adjacent second fingers 104. Again, the second fingers 102 are accommodated in the accommodating space 112 of the first fingers 103. The first fingers 103 are substantially U-shaped, comprising each two upwardly facing legs 117. The space between said legs 117 defines the accommodating space 112. The second fingers 104 are substantially T-shaped, comprising a horizontal portion 118, which protrudes with respect to the centerline of the finger in an alternating pattern. It can be seen that the horizontal portion 118 of the second fingers 104 is resting on top of the legs 117 of the first fingers 103. However, the horizontal portion 118 of the second fingers 104 does not entirely cover the top of the legs 117 of the first fingers 103 due to the alternatingly protruding pattern. Where the second fingers 104 cover the first fingers 103, the contact areas 113 and 114 substantially overlap. That is, the contact area 114 of the second fingers 104 are situated above, preferably covering, the contact area 113 of the first fingers 103, at least locally as indicated in the figure. Where the contact areas 113 of the first fingers 103 are covered by the contact areas 114 of the second fingers 104, they may mutually abut against an object 115, or only the contact area 114 of the second finger 104 may abut against the object. Each upwardly facing leg 117 of the first finger 103 comprises a plurality of contact areas 113, wherein preferably only half of each of the contact areas 113 of each leg 117 is covered by contact areas 114 of the second fingers 104. The latter preferably in alternating manner as shown by the figure. In order to prevent water, dirt and the like from accumulating in the accommodating space 112, a plurality of drainage openings 116 are provided.

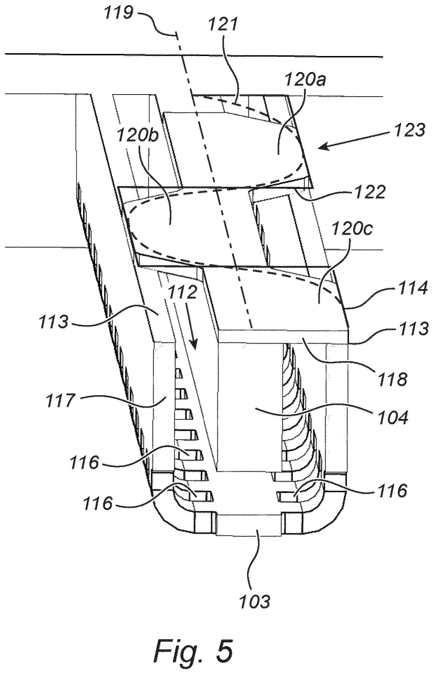

Figure 5 shows a cross sectional view of a first finger 103 and second finger 104 in combined position. The figure clearly indicates the horizontal portion 118 of the second finger 104 resting on the upwardly facing leg 117. This is also the location where the contact area 114 of the second finger 104 covers, or lies on top of, the contact area 113 of the first finger 103. On a bottom side of the U-shaped first finger 103 a plurality of drainage openings 116 are provided. Not only does this reduce the weight of the finger 103, it also prevents dirt, debris, or water from clogging up the accommodating space 112. It can be seen in great detail that the horizontal portion 118 of the second finger 104 protrudes laterally with respect to the centerline 119 of the second finger 104. It is explicitly indicated that the first protrusion 120a extends on a right side of the centerline 119, the second protrusion 120b extends on the left side of the centerline, and the third protrusion 120c again extends on the right side of the centerline 119. Indicated by the dashed line 121 and the continuous line 122 are two alternative variants of the alternating pattern. Hence, as long as an object 115 may abut somewhere 123 against the contact area this should be understood to fall within the scope of the invention.

The above-described inventive concepts are illustrated by several illustrative embodiments. It is conceivable that individual inventive concepts, including inventive details, may be applied without, in so doing, also applying other details of the described embodiments. It is not necessary to elaborate on examples of all conceivable combinations of the above-described inventive concepts, as a person skilled in the art will understand numerous inventive concepts can be (re)combined in order to arrive at a specific application and/or alternative embodiment.

The ordinal numbers used in this document, like "first", "second", and "third" are used only for identification purposes. Hence, the use of expressions like a "second" component, does therefore not necessarily require the co-presence of a "first" component. By "complementary" components is meant that these components are configured to co-act with each other. However, to this end, these components do not necessarily have to have complementary forms. The verb "comprise" and conjugations thereof used in this patent publication are understood to mean not only "comprise", but are also understood to mean the phrases "contain", "substantially consist of", "formed by" and conjugations thereof.

## Claims

1. Device for lifting and/or displacing a plurality of objects, in particular plant pots, more in particular plant pots having a substantially frustoconical shape, relative to a ground surface, comprising:
- at least one first fork, comprising
o at least two elongated mutually spaced apart and substantially parallel first fingers, comprising a plurality of first contact areas for abutting against at least one object to be displaced,
- at least one second fork, comprising
∘ at least two elongated mutually spaced apart and substantially parallel second fingers, comprising a plurality of second contact areas for abutting against at least one object to be displaced, wherein the at least two second fingers and the at least two first fingers are movable with respect to each other in at least a vertical direction,
wherein a distance between centerlines of a pair of adjacent first fingers and a pair of adjacent second fingers is substantially equal, and wherein the contact areas of at least one second finger laterally protrudes in an alternating pattern with respect to the centerline of said at least one second finger.

2. Device according to claim 1, wherein the at least two second fingers and the at least two first fingers are at least movable in an upward and downward direction along the same vertical path.

3. Device according to claim 1 or 2, wherein at least one first finger, preferably each first finger, comprises an accommodating space, configured for accommodating at least a portion of at least one second finger, preferably each second finger.

4. Device according to any of the preceding claims, wherein the at least one first finger is substantially U-shaped, wherein each upward leg of the substantially U-shaped first finger comprises a plurality of second contact areas, preferably wherein the U-shape defines an accommodating space for accommodating at least a portion of at least one second finger.

5. Device according to claim 3 or 4, wherein at least a part of at least one second finger, in particular one contact area of at least one second finger, covers at least a portion of a contact area of at least one first finger, at least when the second finger is partially accommodated in the first finger.

6. Device according to any of the preceding claims, wherein the number of contact areas of at least one second finger, preferably each second finger, is less than the number of contact areas of at least one first finger, preferably each first finger, preferably, wherein the number of contact areas of at least one second finger, preferably each second finger, is substantially half the number of contact areas of at least one first finger, preferably each first finger.

7. Device according to any of the preceding claims, wherein contact areas are arranged on mutually facing sides of a pair of adjacent first fingers and/or a pair of second fingers such that said pair of adjacent first fingers and/or said pair of second fingers are arranged to co-act, such as to lift an object to be displaced, and/or wherein a maximum width of at least one second finger, preferably each second finger, is smaller or equal to a width of at least one first finger, preferably each first finger, and/or wherein at least one first finger, preferably each first finger defines a lowest vertical boundary position of at least one second finger, preferably each second finger.

8. Device according to any of the preceding claims, wherein the at least one first fork and/or the at least one second fork are movably attached to a support structure.

9. Device according to claim 8, wherein said support structure comprises a coupling element, for allowing the support structure to be coupled to a forklift, in particular to a mast and/or carriage of said forklift.

10. Device according to claim 8 or 9, wherein the support structure comprises at least one lifting mechanism, wherein said lifting mechanism is configured for moving the at least one second fork with respect to the support structure and/or with respect to the at least one first fork.

11. Device according to claim 10, wherein the lifting mechanism comprises at least one connection element, preferably a belt or chain, wherein said connection element is configured for connecting the lifting mechanism to a drive of a forklift.

12. Device according to any of the preceding claims, wherein the length of at least one first finger and/or at least one second finger is situated between 1.0 m and 3.5 m, preferably between 1.5 m and 2.5 m.

13. Device according to any of the preceding claims, wherein the first fork comprises at least five, in particular at least eight, elongated mutually spaced apart and substantially parallel first fingers, comprising a plurality of first contact areas for abutting against at least one object to be displaced, and wherein the at least one second fork comprises at least five, in particular at least eight, elongated mutually spaced apart and substantially parallel second fingers, comprising a plurality of second contact areas for abutting against at least one object to be displaced, preferably wherein the first fork is arranged for lifting a matrix of N rows by M columns, and wherein the second fork is arranged for lifting a subset of objects from each of the M columns of the N by M matrix.

14. Device according to any of the preceding claims, wherein a bottom side of at least one first finger, preferably each first finger, is provided with one or more openings arranged on a bottom side thereof.

15. Forklift, wherein said forklift is provided with a device according to any of the preceding claims.
